# EUROPEAN PATENT SPECIFICATION

(11) **EP 2 730 373 B1**
(45) Date of publication and mention of the grant of the patent: **09.05.2018**
(21) Application number: 13192244.5
(22) Date of filing: 08.11.2013
(51) Int. Cl.: H02G 1/00, B25B 7/02, B25B 7/14, B25B 7/22, H02G 1/12

(54) **PLIERS HAVING A SLIDING LOCK BUTTON**
ZANGE MIT GLEITSPERRKNOPF
PINCES PRÉSENTANT UN BOUTON DE VERROUILLAGE COULISSANT

(30) Priority: 09.11.2012 US 201261724554 P
(43) Date of publication of application: 14.05.2014
(73) Proprietor: Milwaukee Electric Tool Corporation, Brookfield, WI 53005 (US)
(72) Inventor: Steele, Michael S., Waukesha, WI 53189 (US); Burch, Wade, Wauwatosa, WI 53213 (US)
(74) Representative: Kenrick, Mark Lloyd

(56) References cited:
- CN-Y- 2 197 172
- DE-U1-202004 013 550
- JP-A- H10 235 032
- US-A- 5 297 343
- US-A1- 2003 126 955
- US-A1- 2011 167 642
- US-B1- 6 336 272
- US-B1- 7 827 638

## Description

The present invention relates to hand tools and, in particular, to pliers that include a wire stripper and a sliding lock.

### BACKGROUND

A number of hand tools have been produced that feature a sliding lock mechanism of some type, including a variety of scissors (US 5 297 343 A, JP H10 235032 A and US 6 336 272 B1), wire strippers (US 2003/126955 A1) and multi-functional tools (US 7 827 638 B1). In particular, pliers including a wire stripper and a sliding lock mechanism are known (US 2011/167642 A1). However, the choice of materials available for said locking mechanisms are limited by the method of assembly and the monolithic nature of the slider.

### SUMMARY

Pliers, especially an electrician's pliers may include such features as a wire stripper and wire cutter. When not in use, it may be desirable to lock the handles of the pliers together. When ready for use, it may be desirable to unlock the handles with one hand.

In one example, which does not describe part of the claimed invention, a hand tool has a first jaw assembly and a second jaw assembly. The first jaw assembly includes a first handle portion, a first jaw portion, a first pivot portion disposed between the first handle portion and the first jaw portion, and a first rail disposed on one of the first pivot portion and the first handle portion. The second jaw assembly includes a second handle portion, a second jaw portion, a second pivot portion disposed between the second handle portion and the second jaw portion, and a second rail disposed on one of the second pivot portion and the second handle portion. The second rail is shorter than the first rail. A pivot member rotatably couples the first pivot portion to the second pivot portion such that the first jaw assembly and the second jaw assembly pivot with respect to each other between at least an open position and a closed position. A lock button is slidingly coupled to the first rail and selectively slidingly coupled to the second rail when the first jaw assembly and second jaw assembly are in the closed position. A resilient member is disposed between the lock button and the first rail to inhibit sliding movement of the lock button.

In a further example disclosed here, which does not describe part of the claimed invention, pliers include a first jaw, a first handle extending from the first jaw, and a first rail extending from the first handle. The first rail includes a jaw end and a handle end. A second jaw is coupled in pivoting relation to the first jaw between at least an open position and a closed position, the first jaw and the second jaw defining a nose of the pliers. A second handle extends from the second jaw, and a second rail extends from the second handle. The second rail is substantially parallel to the first rail when the second jaw is in the closed position, and the second rail is shorter than the first rail. A lock button is slidingly coupled to the first rail and selectively coupled to the second rail when the second handle is in the closed position, and the first handle fixedly coupled to the second handle when the lock button is coupled to the second rail. A resilient member is disposed between the first rail and the lock button, whereby the resilient member inhibits sliding movement of the lock button.

In one aspect of the invention there is provided, a hand tool which includes a first jaw assembly including a first handle portion, a first jaw portion and a first rail; a second jaw assembly including a second handle portion, a second jaw portion, and a second rail, the second rail being shorter than the first rail; a pivot member coupling the first jaw assembly and the second jaw assembly for pivoting movement between an open position and a closed position; and a lock button assembly operable between a locked position, in which the lock button assembly engages the first rail and the second rail to releasably hold the first jaw assembly and the second jaw assembly in the closed position, and an unlocked position, in which the lock button assembly is disengaged from the second rail. The lock button assembly includes a first lock button member defining a second rail groove operable to selectively receive the second rail, and a second lock button member separate from and connectable to the first lock button member, the first lock button member and the second lock button member, when connected, cooperating to define a first rail groove receiving the first rail.

Pliers may generally include a first jaw assembly including a first handle portion, a first jaw portion, and a first rail; a second jaw assembly including a second handle portion, a second jaw portion, and a second rail, the second rail being shorter than the first rail; a pivot member coupling the first jaw assembly and the second jaw assembly for pivoting movement between an open position and a closed position; and a lock button assembly operable between a locked position, in which the lock button assembly engages the first rail and the second rail to releasably hold the first jaw assembly and the second jaw assembly in the closed position, and an unlocked position, in which the lock button assembly is disengaged from the second rail. The lock button assembly may include a first lock button member defining a second rail groove operable to selectively receive the second rail, and a second lock button member separate from and connectable to the first lock button member, the first lock button member and the second lock button member, when connected, cooperating to define a first rail groove receiving the first rail.

In another aspect of the invention, a lock button assembly for a hand tool is provided. The hand tool includes a first jaw assembly including a first handle portion, a first jaw portion, and a first rail, a second jaw assembly including a second handle portion, a second jaw portion, and a second rail, the second rail being shorter than the first rail, a pivot member coupling the first jaw assembly and the second jaw assembly for pivoting movement between an open position and a closed position. The lock button assembly generally includes a first lock button member defining a second rail groove operable to selectively receive the second rail; and a second lock button member separate from and connectable to the first lock button member, the first lock button member and the second lock button member, when connected, cooperating to define a first rail groove receiving the first rail. When supported on the first rail, the lock button assembly is operable between a locked position, in which the lock button assembly engages the first rail and the second rail to releasably hold the first jaw assembly and the second jaw assembly in the closed position, and an unlocked position, in which the lock button assembly is disengaged from the second rail.

Other independent aspects of the invention will become apparent by consideration of the detailed description, claims and accompanying drawings.

### BRIEF DESCRIPTION OF THE DRAWINGS

FIG. 1 is a side view of electrician's pliers, which does not describe part of the claimed invention.
FIG. 2 is a cross-sectional view taken along section line 2-2 of FIG. 1
FIG. 3 is a perspective view of the electrician's pliers of FIG. 1, illustrated in an unlocked and open state.
FIG. 4 is a side view of another example of electrician's pliers, which does not describe part of the claimed invention.
FIG. 5 is a cross section of the electrician's pliers of FIG. 4, taken along section line 5-5.
FIG. 6 is a side view of electrician's pliers according to an aspect of the invention.
FIG. 7 is a perspective view of a locking button assembly of the electrician's pliers of FIG. 6.
FIG. 8 is an exploded view of the locking button assembly of FIG. 7.

Before any independent embodiments of the invention are explained in detail, it is to be understood that the invention is not limited in its application to the details of construction and the arrangement of components set forth in the following description or illustrated in the following drawings. The invention is capable of other independent embodiments and of being practiced or of being carried out in various ways.

### DETAILED DESCRIPTION

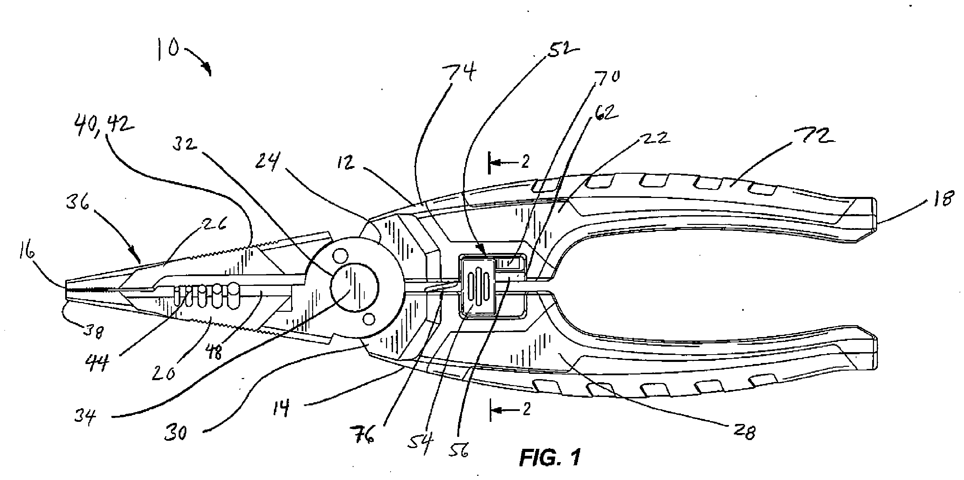

FIG. 1 illustrates pliers 10 in the form of electrician's pliers. The pliers 10 include a first member 12, or jaw assembly, and a second member 14, or jaw assembly. Each member 12, 14 has a jaw end 16 and a handle end 18. The first member 12 includes a first jaw portion 20, a first handle portion 22 and a first pivot portion 24 disposed between the first jaw portion 20 and the first handle portion 22. The second jaw assembly 14 includes second jaw portion 26, a second handle portion 28, and a second pivot portion 30 disposed between the second jaw 26 portion and the second handle portion 28. The first pivot portion 24 and second pivot portion 30 each define a pivot aperture 32. The first member 12 is pivotally coupled to the second member 14 about a pivot pin 34 disposed within the pivot apertures 32.

The first jaw portion 20 and second jaw portion 26 together define a nose 36 of the pliers 10. Each jaw portion 20, 26 tapers to a narrow point 38, and, therefore, the pliers 10 may be described as "needle-nose" pliers. Each of the jaw portions 20, 26 includes a plurality of ribs or ridges 40 that create a textured area 42 at the nose 36 of the pliers.

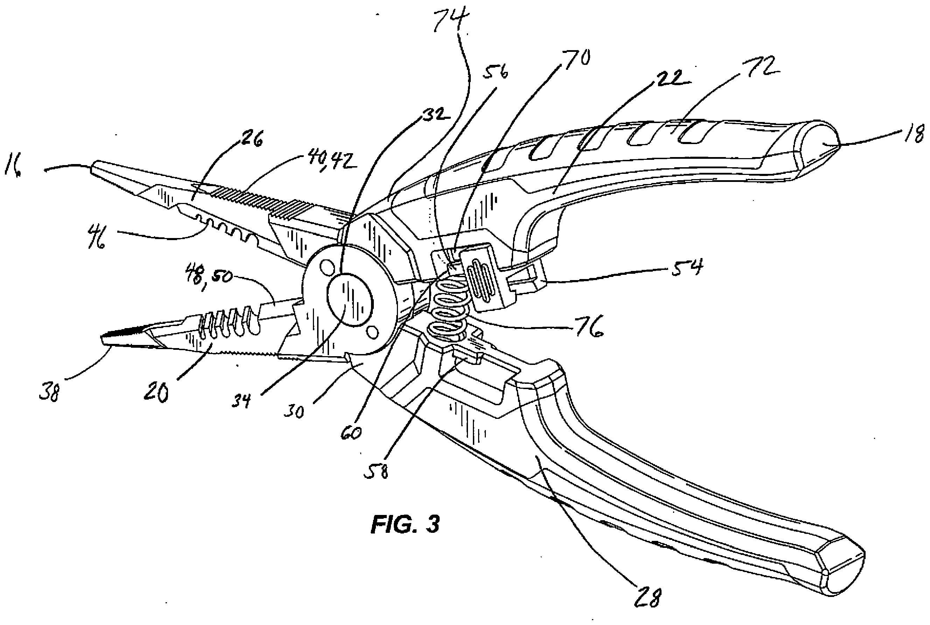

As shown in FIG. 1, apertures 44 extend through the nose of the pliers 10. With reference to FIG. 3, a half 46 of each aperture 44 is formed in each of the jaw portions 20, 26. The apertures 44 are used to strip insulation from a wire, without substantial penetration of the underlying wire core. Each aperture 44 has a different diameter so that each aperture may be used to strip a different size wire.

In addition to the apertures 44 for wire-stripping, the first jaw portion 20 and second jaw portion 26 each include a beveled edge 48. The beveled edges 48 act in conjunction to define a cutter 50 for wire or the like.

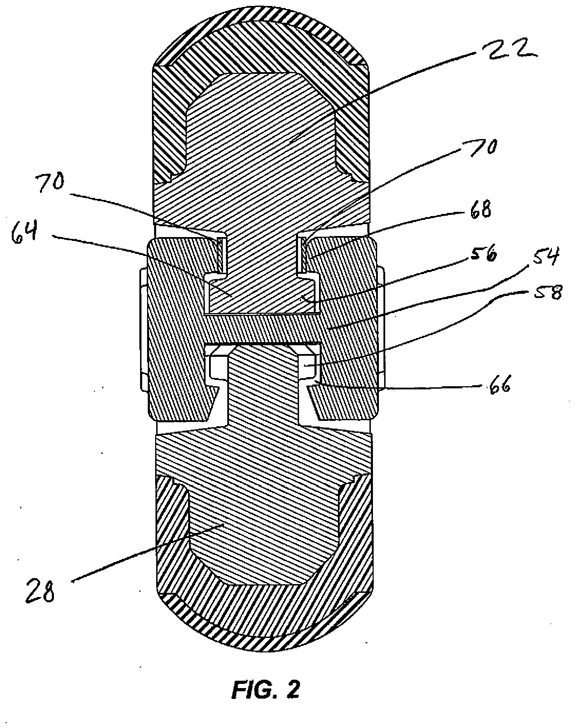

Referring to FIGS. 1-3, the pliers 10 include a lock assembly 52. The lock assembly 52 includes a locking button 54 slidably coupled to a first guide rail 56 on the first handle portion 22. The locking button 54 is selectively, slidably coupled to a second guide rail 58 on the second handle portion 28. The first guide rail 56 has a jaw end 60 (FIG. 3) and a handle end 62 (FIG. 1). As shown in FIG. 2, the first guide rail 56 and second guide rail 58 each have a T-shaped cross-section 64. The second guide rail 58 is shorter than the first guide rail 56. When the pliers 10 is closed, as illustrated in FIGS. 1 and 2, the first guide rail 56 and second guide rail 58 are substantially parallel.

As shown in FIG. 2, the locking button 54 defines a pair of opposed, T-shaped slots 66. Each T-shaped slot 66 corresponds generally to the cross-section 64 of the first guide rail 56 and second guide rail 58. Each slot 66 includes a pair of retaining flanges 68 for coupling the locking member 54 to the respective guide rail 56, 58.

With the members 12, 14 in a closed position, as illustrated in FIG. 1, the locking button 54 is positioned toward the jaw end 60 of the first guide rail 56, thereby engaging the second guide rail 58 and locking the pliers 10 closed. To unlock the pliers 10, the locking button 54 is slid toward the handle end 62 of the first guide rail 56. As shown in FIG. 3, with the locking button 54 at the handle end 62 of the first guide rail 56, the locking button 54 is no longer engaged to the second guide rail 58 and the members 12, 14 are separated to the illustrated open position.

As best shown in FIG. 2, a pair of resilient members 70 is disposed between the first guide rail 56 and the locking button 54. In the illustrated pliers 10, each resilient member 70 is an elongated, rectangular member disposed substantially parallel to the first guide rail 56, and in particular, a leaf spring. In further pliers 10, the resilient members 70 may be formed of plastic, rubber, or other non-metallic resilient materials. The resilient members 70 apply tension between the first guide rail 56 and the locking button 54, which inhibits the locking button 54 from sliding into engagement with the second guide rail 58 while in use. In some embodiments, the resilient members 70 bias the locking button 54 toward at least one of the jaw end 60 and the handle end 62 of the first guide rail 56. More particularly, the resilient member 70 biases the locking button 54 away an intermediate position, between the jaw end 60 and the handle end 62 of the first guide rail 56. Thus, the resilient member 70 inhibits the locking button 54 from unintentionally engaging or disengaging the second guide rail 58.

In the illustrated pliers 10, the jaw portions 20, 26, handle portions 22, 28, and pivot portions 24, 30 of the each member 12, 14 are formed as one piece from a metal such as an alloy steel. The handle portions 22, 28 are both covered with a rubber over-mold 72. The over-molds 72 provide extra durability, increase user comfort, and reduce slippage of the user's hand on the pliers 10. The over-mold 72 is substantially flush with exposed metal portions 74 of the handle portions 22, 28, which helps prevent the over-molds 72 from getting caught on a tool pouch, shirt pocket, or other objects.

Referring to FIGS. 1 and 3, the pliers 10 include a handle biasing member 76 disposed between the first handle portion 22 and the second handle portion 28. The illustrated handle biasing member 76 is a coil spring, though in other pliers a leaf spring may be used. The biasing member 76 causes the pliers 10 to pivot to an open position when the handles are unlocked, thus aiding one-handed use of the pliers 10.

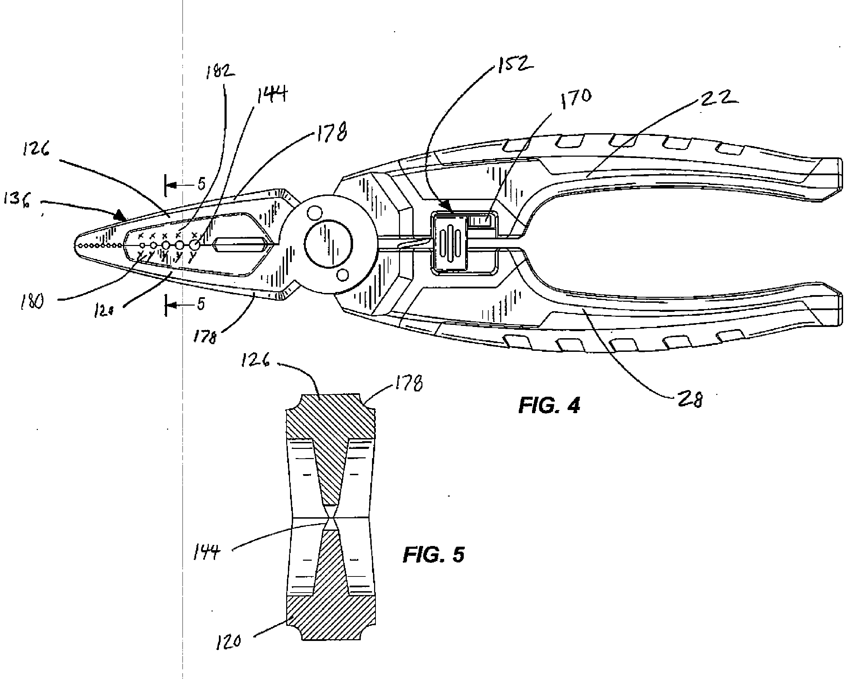

FIGS. 4 and 5 illustrate further pliers 110 in which similar features to those illustrated in the pliers 10 of FIGS. 1-3 have been given similar reference numerals, with a prefix beginning with the numeral "1." The handle portions 122, 128 and the lock assembly 152 of the pliers 110 are substantially identical to those of FIGS. 1-3.

Referring to FIGS. 4 and 5, the pliers 110 includes semi-circular or curved grooved edges 178 on the jaw portions 120, 126. The grooved edges 178 allow the user to use the pliers 110 to ream a pipe to remove burrs or otherwise smooth the inside of a pipe wall along a cut of the pipe. To use the pliers 110 as a reamer, the user inserts the nose of the pliers 110 into a pipe or the like, until the pipe wall contacts the grooved edges 178 and the user rotates the pipe or pliers so that the edges 178 remove burrs and smooth the pipe wall along the cut.

Also illustrated in FIG. 4, a first set of indicia 180 and a second set of indicia 182 are located next to the apertures 144. The first set of indicia 180 correspond to standard American Wire Gauge (AWG) sizes and the second set of indicia 182 correspond to standard International Standard Wire sizes so that the user knows which aperture to use to strip a particular size wire.

Accordingly, the pliers 10 and 110 may include several accessory features, such as wire strippers, a wire cutter, a pipe reamer, or various combinations of these features. Also, while the illustrated pliers 10 is a needle nose pliers, other types of pliers can include the accessory features described herein.

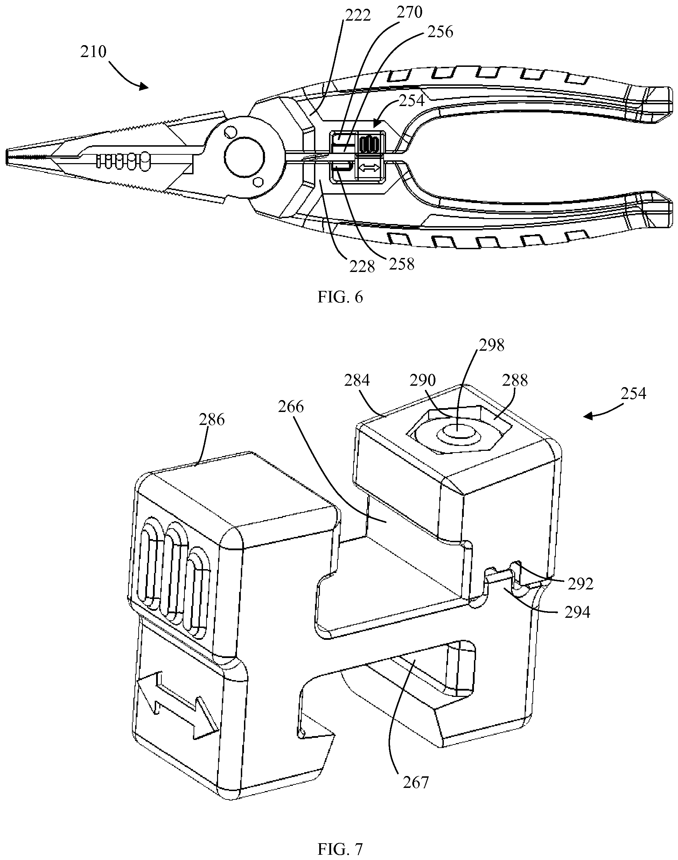

FIG. 6 illustrates pliers 210 according to an independent embodiment of the invention, and, in particular, the illustrated pliers 210 are electrician's pliers. The pliers 210 includes features similar to the above mentioned pliers 10, including a first handle portion 222 and a second handle portion 228, and only those features of pliers 210 that differ from pliers 10 are discussed in detail below. The pliers 210 include a lock assembly. The lock assembly includes a locking button assembly 254 slidably coupled to a first guide rail 256 on the first handle portion 222. The locking button assembly 254 is selectively, slidably coupled to a second guide rail 258 on the second handle portion 228. The first and second guide rail 256, 258 each have a T- shaped cross-section, and the locking button assembly 254 defines a pair of opposed, T-shaped slots as in the previous embodiment. The locking button assembly 254 performs a similar task and is operated the same way as the locking button 54 of the previous pliers 10, but the locking button assembly 254 is of a different construction as described below.

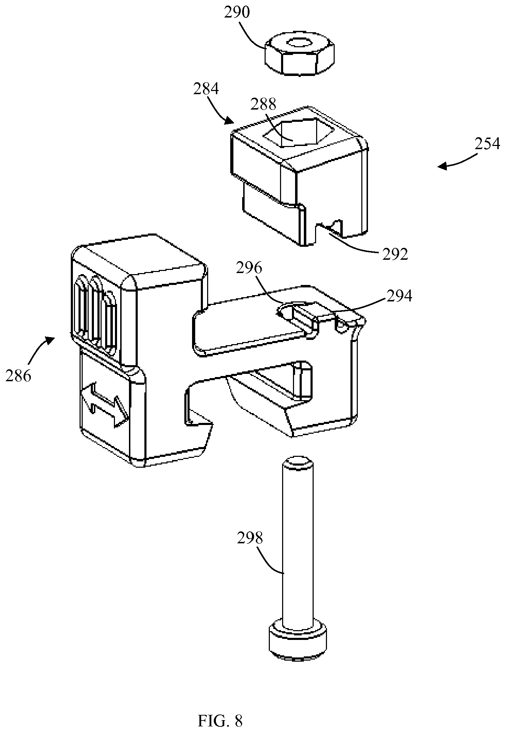

With reference to FIGS. 7 and 8, the locking button assembly 254 includes a first locking button member 286 that couples to a first half of the first guide rail 256 on the first handle portion 222 and the entire second guide second guide rail 258 on the second handle portion 228. The first locking button member 286 includes a protrusion, or rail, 294 and an aperture 296. The locking button assembly 254 includes a second locking button member 284 that couples to a second half of the first guide rail 256. The second locking button member 284 includes an aperture288, a recess, and a slot 292. The first and second locking button members 286, 284 are preferably made from a metal, for instance Zinc, using methods such as die cast, metal injection molding, or powder metallurgy. The metal construction of the first and second locking button members 286, 284 provides improved locking strength of the locking assembly, however, the rigid construction of the locking button assembly 254 changes the assembly process.

The first and second locking buttons members 286, 284 are coupled together with a fastener 298 that is inserted in the aperture 296 of the first locking button member 286 and is disposed through both of the apertures 296, 288of the first and second locking button members 286, 284. The fastener includes a nut 290 that sets into the recess of the second locking button member 284. Relative rotation between the first and second locking members 286, 284 is prevented by the rail 294 of the first locking button member 286 received by the slot 292 of the second locking button member 284. However, the mating rail 294 and slot 292 connection can be interchanged such that the rail 294 is part of the second locking button member 284 and the slot 292 is part of the first locking button member 286. Although illustrated as such, the first locking button member 286 can couple half of the second guide rail 258 and the entire first guide rail 256, with the second locking button member 284 coupled to the other half of the second guide rail 258.

## Claims

1. A hand tool comprising:
a first jaw assembly including a first handle portion (222), a first jaw portion and a first rail (256);
a second jaw assembly including a second handle portion (228), a second jaw portion, and a second rail (258), the second rail being shorter than the first rail (256);
a pivot member coupling the first jaw assembly and the second jaw assembly for pivoting movement between an open position and a closed position; and
a lock button assembly (254) operable between a locked position, in which the lock button assembly (254) engages the first rail (256) and the second rail (258) to releasably hold the first jaw assembly and the second jaw assembly in the closed position, and an unlocked position, in which the lock button assembly (254) is disengaged from the second rail (258), the lock button assembly (254) including
a first lock button member (286) defining a second rail groove operable to selectively receive the second rail (258), and
a second lock button member (284) separate from and connectable to the first lock button member (286), the first lock button member (286) and the second lock button member (284), when connected, cooperating to define a first rail groove receiving the first rail (256).

2. The hand tool of claim 1, wherein the hand tool includes pliers.

3. The hand tool of claim 1 or 2, wherein one of the first lock button member (286) and the second lock button member (284) has a protrusion (294), and the other of the first lock button member (286) and the second lock button member (284) defines a mating groove (292) operable to receive the protrusion (294) to inhibit relative rotational movement between the first lock button member (286) and the second lock button member (284).

4. The hand tool of claim 3, wherein at least one of the first lock button member (286) and the second lock button member (284) defines an opening (296), and wherein the lock button assembly (254) further includes a fastener (298) receivable in the opening (296) to connect the first lock button member (286) to the second lock button member (284).

5. The hand tool of claim 4, wherein the lock button assembly (254) further includes a nut (290) operable to be secured on the fastener (298).

6. The hand tool of claim 5, wherein a portion of the opening (296) is defined in hexagonal shape complementary to the nut (290).

7. The hand tool of claim 1 or 2, wherein the first rail (256) has a T-shaped cross section, and wherein the first lock button member (286) and the second lock button member (284) cooperate to define a T-shaped slot for receiving the first rail (256).

8. The hand tool of claim 7, wherein the first lock button member (286) and the second lock button member (284) are translationally moved along the first rail (256) between the locked position and the unlocked position.

9. A lock button assembly (254) for a hand tool, the hand tool including a first jaw assembly including a first handle portion (222), a first jaw portion, and a first rail (256), a second jaw assembly including a second handle portion (228), a second jaw portion, and a second rail (258), the second rail being shorter than the first rail, a pivot member coupling the first jaw assembly and the second jaw assembly for pivoting movement between an open position and a closed position, the lock button assembly comprising:
a first lock button member (286) defining a second rail groove operable to selectively receive the second rail (258); and
a second lock button member (284) separate from and connectable to the first lock button member (286), the first lock button member (286) and the second lock button member (284), when connected, cooperating to define a first rail groove receiving the first rail (256);
wherein, when supported on the first rail (256), the lock button assembly is operable between a locked position, in which the lock button assembly (254) engages the first rail (256) and the second rail (258) to releasably hold the first jaw assembly and the second jaw assembly in the closed position, and an unlocked position, in which the lock button assembly (254) is disengaged from the second rail (258).

10. The lock button assembly (254) of claim 9, wherein one of the first lock button member (286) and the second lock button member (284) has a protrusion (294), and the other of the first lock button member (286) and the second lock button member (284) defines a mating groove (292) operable to receive the protrusion (294) to inhibit relative rotational movement between the first lock button member (286) and the second lock button member (284).

11. The lock button assembly (254) of claim 10, wherein at least one of the first lock button member (286) and the second lock button member (284) defines an opening (296), and wherein the lock button assembly (254) further comprises a fastener (298) receivable in the opening (296) to connect the first lock button member (286) to the second lock button member (284).

12. The lock button assembly (254) of claim 11, further comprising a nut (290) operable to be secured on the fastener (298).

13. The lock button assembly (254) of claim 12, wherein a portion of the opening (296) is defined in hexagonal shape (288) complementary to the nut (290).

## Patentansprüche

1. Hand-Werkzeug, das Folgendes umfasst:
eine erste Klemmbackenbaugruppe, die einen ersten Handgriffabschnitt (222), einen ersten Klemmbackenabschnitt und eine erste Schiene (256) einschließt,
eine zweite Klemmbackenbaugruppe, die einen zweiten Handgriffabschnitt (228), einen zweiten Klemmbackenabschnitt und eine zweite Schiene (258) einschließt, wobei die zweite Schiene kürzer ist als die erste Schiene (256),
ein Drehgelenkelement, das die erste Klemmbackenbaugruppe und die zweite Klemmbackenbaugruppe für eine Schwenkbewegung zwischen einer offenen Stellung und einer geschlossenen Stellung verbindet, und
eine Sperrknopf-Baugruppe (254), die bedienbar ist zwischen einer verriegelten Stellung, in der die Sperrknopf-Baugruppe (254) die erste Schiene (256) und die zweite Schiene (258) in Eingriff nimmt, um die erste Klemmbackenbaugruppe und die zweite Klemmbackenbaugruppe lösbar in der geschlossenen Stellung zu halten, und einer entriegelten Stellung, in der die Sperrknopf-Baugruppe (254) von der zweiten Schiene (258) ausgerückt ist, wobei die Sperrknopf-Baugruppe (254) Folgendes einschließt:
ein erstes Sperrknopfelement (286), das eine zweite Schienenrille definiert, die funktionsfähig ist, um selektiv die zweite Schiene (258) aufzunehmen, und
ein zweites Sperrknopfelement (284), das von dem ersten Sperrknopfelement (286) getrennt und mit demselben zu verbinden ist, wobei das erste Sperrknopfelement (286) und das zweite Sperrknopfelement (284), wenn sie verbunden sind, zusammenwirken, um eine erste Schienenrille zu definieren, welche die erste Schiene (256) aufnimmt.

2. Hand-Werkzeug nach Anspruch 1, wobei das Hand-Werkzeug eine Zange einschließt.

3. Hand-Werkzeug nach Anspruch 1 oder 2, wobei das eine von dem ersten Sperrknopfelement (286) und dem zweiten Sperrknopfelement (284) einen Vorsprung (294) hat und das andere von dem ersten Sperrknopfelement (286) und dem zweiten Sperrknopfelement (284) eine passende Rille (292) definiert, die funktionsfähig ist, um den Vorsprung (294) aufzunehmen, um eine relative Drehbewegung zwischen dem ersten Sperrknopfelement (286) und dem zweiten Sperrknopfelement (284) zu hemmen.

4. Hand-Werkzeug nach Anspruch 3, wobei wenigstens eines von dem ersten Sperrknopfelement (286) und dem zweiten Sperrknopfelement (284) eine Öffnung (296) definiert und wobei die Sperrknopf-Baugruppe (254) ein Befestigungselement (298) einschließt, das in der Öffnung (296) aufgenommen werden kann, um das erste Sperrknopfelement (286) mit dem zweiten Sperrknopfelement (284) zu verbinden.

5. Hand-Werkzeug nach Anspruch 4, wobei die Sperrknopf-Baugruppe (254) ferner eine Mutter (290) umfasst, die funktionsfähig ist, um an dem Befestigungselement (298) befestigt zu werden.

6. Hand-Werkzeug nach Anspruch 5, wobei ein Abschnitt der Öffnung (296) in einer zu der Mutter (290) komplementären sechseckigen Form definiert ist.

7. Hand-Werkzeug nach Anspruch 1 oder 2, wobei die erste Schiene (256) einen T-förmigen Querschnitt hat und wobei das erste Sperrknopfelement (286) und das zweite Sperrknopfelement (284) zusammenwirken, um einen T-förmigen Schlitz zum Aufnehmen der ersten Schiene (256) zu definieren.

8. Hand-Werkzeug nach Anspruch 7, wobei das erste Sperrknopfelement (286) und das zweite Sperrknopfelement (284) translatorisch entlang der ersten Schiene (256) zwischen der verriegelten Stellung und der entriegelten Stellung bewegt werden.

9. Sperrknopf-Baugruppe (254) für ein Hand-Werkzeug, wobei das Hand-Werkzeug eine erste Klemmbackenbaugruppe, die einen ersten Handgriffabschnitt (222), einen ersten Klemmbackenabschnitt und eine erste Schiene (256) einschließt, eine zweite Klemmbackenbaugruppe, die einen zweiten Handgriffabschnitt (228), einen zweiten Klemmbackenabschnitt und eine zweite Schiene (258) einschließt, wobei die zweite Schiene kürzer ist als die erste Schiene, ein Drehgelenkelement, das die erste Klemmbackenbaugruppe und die zweite Klemmbackenbaugruppe für eine Schwenkbewegung zwischen einer offenen Stellung und einer geschlossenen Stellung verbindet, einschließt, wobei die Sperrknopf-Baugruppe Folgendes umfasst:
ein erstes Sperrknopfelement (286), das eine zweite Schienenrille definiert, die funktionsfähig ist, um selektiv die zweite Schiene (258) aufzunehmen, und
ein zweites Sperrknopfelement (284), das von dem ersten Sperrknopfelement (286) getrennt und mit demselben zu verbinden ist, wobei das erste Sperrknopfelement (286) und das zweite Sperrknopfelement (284), wenn sie verbunden sind, zusammenwirken, um eine erste Schienenrille zu definieren, welche die erste Schiene (256) aufnimmt,
wobei, wenn sie auf der ersten Schiene (256) getragen wird, die Sperrknopf-Baugruppe bedienbar ist zwischen einer verriegelten Stellung, in der die Sperrknopf-Baugruppe (254) die erste Schiene (256) und die zweite Schiene (258) in Eingriff nimmt, um die erste Klemmbackenbaugruppe und die zweite Klemmbackenbaugruppe lösbar in der geschlossenen Stellung zu halten, und einer entriegelten Stellung, in der die Sperrknopf-Baugruppe (254) von der zweiten Schiene (258) ausgerückt ist.

10. Sperrknopf-Baugruppe (254) nach Anspruch 9, wobei das eine von dem ersten Sperrknopfelement (286) und dem zweiten Sperrknopfelement (284) einen Vorsprung (294) hat und das andere von dem ersten Sperrknopfelement (286) und dem zweiten Sperrknopfelement (284) eine passende Rille (292) definiert, die funktionsfähig ist, um den Vorsprung (294) aufzunehmen, um eine relative Drehbewegung zwischen dem ersten Sperrknopfelement (286) und dem zweiten Sperrknopfelement (284) zu hemmen.

11. Sperrknopf-Baugruppe (254) nach Anspruch 10, wobei wenigstens eines von dem ersten Sperrknopfelement (286) und dem zweiten Sperrknopfelement (284) eine Öffnung (296) definiert und wobei die Sperrknopf-Baugruppe (254) ein Befestigungselement (298) einschließt, das in der Öffnung (296) aufgenommen werden kann, um das erste Sperrknopfelement (286) mit dem zweiten Sperrknopfelement (284) zu verbinden.

12. Sperrknopf-Baugruppe (254) nach Anspruch 11, die ferner eine Mutter (290) umfasst, die funktionsfähig ist, um an dem Befestigungselement (298) befestigt zu werden.

13. Sperrknopf-Baugruppe (254) nach Anspruch 12, wobei ein Abschnitt der Öffnung (296) in einer zu der Mutter (288) komplementären sechseckigen Form definiert ist.

## Revendications

1. Outil à main comprenant :
un premier ensemble de mâchoire qui inclut une première partie de manche (222), une première partie de mâchoire et un premier rail (256) ;
un second ensemble de mâchoire qui inclut une seconde partie de manche (228), une seconde partie de mâchoire et un second rail (258), le second rail étant plus court que le premier rail (256) ;
un élément de pivot qui couple le premier ensemble de mâchoire et le second ensemble de mâchoire pour un mouvement de pivotement entre une position ouverte et une position fermée ; et
un ensemble de bouton de verrouillage (254) qui est fonctionnel entre une position verrouillée dans laquelle l'ensemble de bouton de verrouillage (254) engage le premier rail (256) et le second rail (258) de manière à maintenir de façon libérable le premier ensemble de mâchoire et le second ensemble de mâchoire dans la position fermée, et une position déverrouillée dans laquelle l'ensemble de bouton de verrouillage (254) est désengagé du second rail (258), l'ensemble de bouton de verrouillage (254) incluant :
un premier élément de bouton de verrouillage (286) qui définit une gorge de second rail qui est fonctionnelle pour recevoir de façon sélective le second rail (258) ; et
un second élément de bouton de verrouillage (284) qui est séparé du premier élément de bouton de verrouillage (286) et qui peut lui être connecté, le premier élément de bouton de verrouillage (286) et le second élément de bouton de verrouillage (284), lorsqu'ils sont connectés, coopérant de manière à ce qu'ils définissent une gorge de premier rail qui reçoit le premier rail (256).

2. Outil à main selon la revendication 1, dans lequel l'outil à main inclut une pince.

3. Outil à main selon la revendication 1 ou 2, dans lequel un élément de bouton de verrouillage pris parmi le premier élément de bouton de verrouillage (286) et le second élément de bouton de verrouillage (284) comporte une protubérance (294), et l'autre élément de bouton de verrouillage pris parmi le premier élément de bouton de verrouillage (286) et le second élément de bouton de verrouillage (284) définit une gorge d'accouplement (292) qui est fonctionnelle pour recevoir la protubérance (294) afin d'inhiber un mouvement de rotation relative entre le premier élément de bouton de verrouillage (286) et le second élément de bouton de verrouillage (284).

4. Outil à main selon la revendication 3, dans lequel au moins un élément de bouton de verrouillage pris parmi le premier élément de bouton de verrouillage (286) et le second élément de bouton de verrouillage (284) définit une ouverture (296), et dans lequel l'ensemble de bouton de verrouillage (254) inclut en outre un moyen de fixation (298) qui peut être reçu dans l'ouverture (296) de manière à connecter le premier élément de bouton de verrouillage (286) au second élément de bouton de verrouillage (284).

5. Outil à main selon la revendication 4, dans lequel l'ensemble de bouton de verrouillage (254) inclut en outre un écrou (290) qui est fonctionnel pour être fixé sur le moyen de fixation (298).

6. Outil à main selon la revendication 5, dans lequel une partie de l'ouverture (296) est définie selon une forme hexagonale qui est complémentaire de la forme de l'écrou (290).

7. Outil à main selon la revendication 1 ou 2, dans lequel le premier rail (256) présente une section en coupe transversale en forme de T, et dans lequel le premier élément de bouton de verrouillage (286) et le second élément de bouton de verrouillage (284) coopèrent de manière à ce qu'ils définissent une fente en forme de T pour recevoir le premier rail (256).

8. Outil à main selon la revendication 7, dans lequel le premier élément de bouton de verrouillage (286) et le second élément de bouton de verrouillage (284) sont déplacés en translation le long du premier rail (256) entre la position verrouillée et la position déverrouillée.

9. Ensemble de bouton de verrouillage (254) pour un outil à main, l'outil à main incluant un premier ensemble de mâchoire qui inclut une première partie de manche (222), une première partie de mâchoire et un premier rail (256), un second ensemble de mâchoire qui inclut une seconde partie de manche (228), une seconde partie de mâchoire et un second rail (258), le second rail étant plus court que le premier rail, un élément de pivot qui couple le premier ensemble de mâchoire et le second ensemble de mâchoire pour un mouvement de pivotement entre une position ouverte et une position fermée, l'ensemble de bouton de verrouillage comprenant :
un premier élément de bouton de verrouillage (286) qui définit une gorge de second rail qui est fonctionnelle pour recevoir de façon sélective le second rail (258) ; et
un second élément de bouton de verrouillage (284) qui est séparé du premier élément de bouton de verrouillage (286) et qui peut lui être connecté, le premier élément de bouton de verrouillage (286) et le second élément de bouton de verrouillage (284), lorsqu'ils sont connectés, coopérant de manière à ce qu'ils définissent une gorge de premier rail qui reçoit le premier rail (256) ; dans lequel :
lorsqu'il est supporté sur le premier rail (256), l'ensemble de bouton de verrouillage est fonctionnel entre une position verrouillée dans laquelle l'ensemble de bouton de verrouillage (254) engage le premier rail (256) et le second rail (258) de manière à maintenir de façon libérable le premier ensemble de mâchoire et le second ensemble de mâchoire dans la position fermée, et une position déverrouillée dans laquelle l'ensemble de bouton de verrouillage (254) est désengagé du second rail (258).

10. Ensemble de bouton de verrouillage (254) selon la revendication 9, dans lequel un élément de bouton de verrouillage pris parmi le premier élément de bouton de verrouillage (286) et le second élément de bouton de verrouillage (284) comporte une protubérance (294), et l'autre élément de bouton de verrouillage pris parmi le premier élément de bouton de verrouillage (286) et le second élément de bouton de verrouillage (284) définit une gorge d'accouplement (292) qui est fonctionnelle pour recevoir la protubérance (294) afin d'inhiber un mouvement de rotation relative entre le premier élément de bouton de verrouillage (286) et le second élément de bouton de verrouillage (284).

11. Ensemble de bouton de verrouillage (254) selon la revendication 10, dans lequel au moins un élément de bouton de verrouillage pris parmi le premier élément de bouton de verrouillage (286) et le second élément de bouton de verrouillage (284) définit une ouverture (296), et dans lequel l'ensemble de bouton de verrouillage (254) comprend en outre un moyen de fixation (298) qui peut être reçu dans l'ouverture (296) de manière à connecter le premier élément de bouton de verrouillage (286) au second élément de bouton de verrouillage (284).

12. Ensemble de bouton de verrouillage (254) selon la revendication 11, comprenant en outre un écrou (290) qui est fonctionnel pour être fixé sur le moyen de fixation (298).

13. Ensemble de bouton de verrouillage (254) selon la revendication 12, dans lequel une partie de l'ouverture (296) est définie selon une forme hexagonale (288) qui est complémentaire de la forme de l'écrou (290).
